Europäisches Patentamt

European Patent Office

Office européen des brevets

(19)

(11) Publication number: **0 187 171 B1**

## EUROPEAN PATENT SPECIFICATION

(45) Date of publication of patent specification: **11.09.91**

(51) Int. Cl.⁵: **C08J 5/12,** C08J 7/04, C08L 23/28, C08L 51/06

(21) Application number: **84200258.6**

(22) Date of filing: **23.02.84**

(54) **Primer compositions.**

(43) Date of publication of application:
**16.07.86 Bulletin 86/29**

(45) Publication of the grant of the patent:
**11.09.91 Bulletin 91/37**

(84) Designated Contracting States:
**DE FR GB IT**

(56) References cited:
**EP-A- 0 086 842         DE-A- 2 252 457**
**GB-A- 2 050 200         US-A- 3 464 940**
**US-A- 3 794 613         US-A- 3 919 153**

(73) Proprietor: **Renout, Tiddo Willem**
**704 Chemin de la Sablière**
**F-06640 Saint Jeannet(FR)**

Proprietor: **Van Meesche, Antonius**
**1469 Chemin des Trious**
**F-06570 Saint Paul de Vence(FR)**

(72) Inventor: **Van Meesche, Antonius**
**1469 Chemin des Trious**
**F-06570 Saint Paul de Vence(FR)**

(74) Representative: **Mommaerts, Johan Hendrik,**
**Dipl.-Phys. et al**
**Exterpatent B.V. Postbus 90649**
**NL-2509 LP Den Haag(NL)**

## Description

This invention relates to primers for bonding a polyolefinic coating to a non-polyolefinic substrate, giving excellent adhesion to both polyolefinics and adhesives used on non-polyolefinic substrates.

Polyolefines, such as polyethylene, polypropylene, polybutene, ethylene-vinyl acetate, ethylene-propylene terpolymers are widely used in the industry for many applications due to their specific mechanical properties and excellent chemical- and weathering resistance. However, due to the excellent resistance to chemicals of the polyolefinic materials, adhesives do not react with the surface of the polyolefines. This results then in a weak bonding between the polyolefines and other substrates such as: metals, plastics, rubber, glass, leather, concrete and others. Various methods have been tried out to improve the bonding of adhesives to polyolefines.

According to EP-A-0 086 842 it is known to use an adhesive for bonding polyolefinic articles to each other, which is heat-curable and comprises a polyolefinic composition and a peroxide.

Other improvements for bonding adhesives to polyolefins, such as for example, surface treatment by flame oxidation, chlorine treatment, ozone oxidation, radiation, corona discharge or chromic acid etching have been used. None of these methods yield satisfactory results for adhering polyolefines to non-polyolefinic substrates for reason of: the complexity of the surface-treatment applied on irregular shaped articles, blends of polyolefines do not respond to the surface treatment, final bondstrength obtained is too low for many applications

Various processes have been proposed for bonding the polyolefinic materials to non-polyolefinic substrates by using modified polyolefines or using intermediate coatings of modified polyolefines to straight forward polyolefines. The modified polyolefines mainly consist of grafted, functional groups like: maleic anhydride, acrylic acid or epoxy to the polyolefines or by the use of ethylene-vinylacetate copolymers. The use of these modified polyolefines improve the adhesion of the polyolefines to metals to a certain extent, however, they are often not economicly practical, because the bonding of the functional groups on the polyolefine to metal takes only place at the melt-temperature of the polyolefine. This will require capital plant investments for processing equipment; also the shape of the articles is a limiting factor.

In accordance with the present invention there is provided a primer composition based on blends of a) modified or grafted polyolefine(s), b) crosslinkable binder components and c) specific crosslinking agent(s).

The primer compositions in accordance with the invention provide excellent adhesion to polyolefinic materials, such as both lineair low density and low density polyethylene, high density polyethylene, polypropylene, polybutene, ethylene-propylene polymers, ethylene-propylene terpolymers, ethylene-vinylacetate copolymers. These polyolefines may be used alone or as a combination of two or more.

The primer compositions in accordance with the invention also provide excellent adhesion to the wide range of commercialy availble adhesives such as for example: cyanoacrylates, epoxies, polyurethanes, acrylics, polyamides, polyesters, nitrile rubber-phenolics, polychloroprene rubber-phenolics, polyvinyl butyrals or blended compositions between the various adhesives. The crosslinkable binder(s) and the specific crosslnking agent(s) in the primer can react with the functional group(s) of the adhesive used.

The primer composition according to the invention to be used in bonding a polyolefinic coating to a non-polyolefinic substrate by means of a crosslinkable adhesive chosen from the epoxy, cyanoacrylate polyurethane, acrylic, polyamide, polyester, nitrile rubber-phenolic, polychloroprene rubber-phenolic, polyvinyl butyral adhesives and blended compostions thereof, is <u>characterized in that</u> said primer composition comprises:

(a) one or more polyolefines being chlorinated with a chlorine % b.w. ranging from 10 to 80 or being grafted with carboxylic groups derived from acrylic acids or maleic· acids or their derivatives, or a combination of said chlorinated and grafted polyolefines,

(b) one or more crosslinkable binder components based on rubber, plastics or resins, and

(c) one or more crosslinking agents chosen from the amines, amido-amines, polyamides, isocyanates, poly-isocyanates, cyanurates and acrylates having hydroxyl and/or carboxyl groups.

The compositions of the invention comprise a blend of a) modified or grafted polyolefine(s), b) crosslinkable binder(s) and c) specific crosslinking agent(s). The physical form of the primer composition of the invention can be in solvents, such as aromatic and halogenated hydrocarbons, or as a resin emulsion in water or in a dry solventless form as a powder or as a hotmelt.

A composition comprising the above ingredients makes it possible to bond non-treated polyolefines to non-polyolefinic substrates, whereby the primer of the composition will make the bond between the non-treated polyolefinic surface and between the adhesive coat applied to the non-polyolefinic substrate.

The polyolefine, to be modified by chlorination, may consist of polyethylene, polypropylene or ethylene-vinylacetate copolymers or blends between each other; the polyolefine to be grafted may consist of polyethylene, polypropylene, ethylene-vinylacetate copolymers or ethylene-propylene terpolymer.

The crosslinkable binder(s) of the primer composition of the invention need to function as compatibelizer agent(s) between the modified or grafted polyolefinic component(s) and the crosslinking agent(s) used for the selected adhesive in order to keep the composition of the primer stable.

The binder material(s) will also function as a viscosity modifier in case of solvent- or waterbased primer compositions and as a carrier for other additives, such as antioxidants, curing agents, heatstabilizers and colorants. The binder material(s) shall not negatively effect the adhesion between the primer and the polyolefinic substrate as well as the adhesion between the primer and the adhesive on the non-polyolefinic substrate.

The nature of the binder material(s) may be a) natural rubber or synthetic rubber component(s), b) plastic component(s), c) natural or synthetic resin component(s). Depending on the binder component(s) selected for the primer, crosslinking of the bindermaterial(s) may be carried out via the conventional chemical- or radiation crosslinking techniques, if required for the performance of the bonded article over a certain temperature range.

The binder material(s) can be used in a proportion of 0,05 from 75 parts, preferably from 5 till 50 parts, by weight, based on 100 parts by weight of the modified or grafted polyolefine(s).

The crosslinking agent(s) of the primers of the invention consist mainly of ingredient(s) which are derived of the crosslinking system used in the adhesive coat on the non-polyolefinic substrate. The nature of the crosslinking agent(s) used in the primer composition will be almost equivalent to the nature of the crosslinking, agent(s) used for the adhesives, such as for example:

    a) crosslinking agents based on amines, amidoamines and polyamides for the epoxy and acrylic based adhesives,

    b) crosslinking agents based on isocyanates for the polyurethane-, acrylic- and rubber/resin based adhesives

    c) crosslinking agents which are carboxylic- or hydroxyl terminated for the polyurethane-, acrylic- and epoxy based adhesives.

The function of the crosslinking agent(s) in the primer composition of the invention is to bond the primercoat to the adhesivecoat on the non-polyolefinic substrate and is based on the same principle of crosslinking, as whereby the adhesive coat will crosslink by itself as defined by the nature of its composition. Secondly the function of the crosslinking agent(s) can be that it can crosslink the bindermaterial(s) in the primer composition, resulting in excellent bondstrengths of the final article over a broad temperature range.

The preparation of the solvent-based primers consist of the mixing of the modified or grafted polyolefine(s), the crosslinkable binder component(s) and the crosslinking agent(s) into a solventblend appropriate to the components chosen; the mixing is done under high-shear forces and at elevated temperature. The preparation of the waterbased primers consist of the emulsification of the primer component(s) into water using the standard techniques for making stable emulsions. The preparation of the solventless primers consist of dryblending of the primer components using the conventional techniques for rubber, plastic or hotmelt blending.

The invention further relates to a method for bonding a polyolefinic coating to a non-polyolefinic substrate by means of a crosslinkable adhesive chosen from the epoxy, cyano-acrylate, polyurethane, acrylic, polyamide, polyester, nitrile rubber-phenolic, polychloroprene rubber-phenolic, polyvinyl butyral adhesives and blended compositions thereof, in which a layer of said adhesive is applied between said substrate and said coating and the layers being laminated thereafter, which method is characterized in that between said coating and said adhesive layers, a layer of a primer composition according to the invention is provided.

This invention is illustrated by the following examples, but they are not to be construed as limiting the present invention.

Example I

5 parts by weight of a chlorinated polypropylene, 2,5 parts by weight of an ethylene-vinylacetate copolymer and 2,5 parts by weight of an epoxy crosslinking agent were dissolved in 75 parts by weight of trichloroethylene and 25 parts by weight of toluene. This primer solution was applied to a non-treated polyolefinic substrate, dried and heat-activated during 30 seconds at 125° C. Afterwards an epoxy adhesive, Araldit AW 106/HV935U® from Ciba Geigy was used for bonding the polyolefinic substrate to steel. After crosslinking of the epoxy adhesive the shearstrength was determined and found at: 70 daN/cm² for polypropylene, 36 daN/cm² for high-density polyethylene, 33 daN/cm² for low-density polyethylene, 33 daN/cm² for polybutene and 19,5 daN/cm² for a blend of EPDM/PP (Santoprene 103-40® from Monsanto Cy).

Example II

10 parts by weight of a chlorinated and grafted polyolefin blend, 2,5 parts by weight of an ethylene-vinylacetate copolymer and 2,5 parts by weight of a polyamide crosslinking agent were dissolved in 75 parts by weight of trichloroethylene and 25 parts by weight of toluene. This primer solution was applied to a non-treated polyolefinic substrate, dried and heat-activated during 30 seconds at 125° C. Afterwards a cyanoacrylate adhesive B 20® from 3M was used for bonding the polyolefinic substrate to steel. After the crosslinking of the cyanoacrylate adhesive the shearstrength was determined and found at: 80 daN/cm² for polypropylene, 35 daN/cm² for high density polyethylene, 31 daN/cm² for low-density polyethylene, 34 daN/cm² for polybutene and 13,5 daN/cm² for a blend EPDM/PP (Santoprene 103-40® from Monsanto Cy).

Example III

30 parts by weight of a chlorinated polypropylene, 5 parts by weight of an ethylene-vinylacetate copolymer and 2,5 parts by weight of a hydroxyl-terminated acrylate were dissolved in 100 parts by weight of trichloroethylene. This primer solution was coated onto a non-treated polyolefinic substrate and dried; a polyurethane adhesive with an isocyanate donor was blended with the primer solution in a 1 : 1 ratio and coated to a non-treated polyester fabric. The coated polyolefinic substrate and the coated polyester fabric were laminated together at 180° C, under 5 bar pressure and within 1 second. Cooling down of the laminate was done at mild pressure and peelstrength were determined after full crosslinking of the polyurethane adhesive. Peelstrength results found were: 35 N/cm for EPDM/PP (Santoprene 101-73®) , 45 N/cm for EPDM/PP (Santoprene 103-40® from Monsanto Cy) and 61: N/cm for polypropylene.

All the polyolefinic substrates described in the examples I, II and III, as well as the non-polyolefinic substrates and the adhesives used were commercially available products.

## Claims

1. A primer composition, to be used in bonding a polyolefinic coating to a non-polyolefinic substrate by means of a crosslinkable adhesive chosen from the epoxy, cyano-acrylate polyurethane, acrylic, polyamide, polyester, nitrile rubber-phenolic, polychloroprene rubber-phenolic, polyvinyl butyral adhesives and blended compostions thereof, characterized in that said primer composition comprises:
   (a) one or more polyolefines being chlorinated with a chlorine % b.w. ranging from 10 to 80 or being grafted with carboxylic groups derived from acrylic acids or maleic acids or their derivatives, or a combination of said chlorinated and grafted polyolefines,
   (b) one or more crosslinkable binder components based on rubber, plastics or resins, and
   (c) one or more crosslinking agents chosen from the amines, amido-amines, polyamides, isocyanates, poly-isocyanates, cyanurates and acrylates having hydroxyl and/or carboxyl groups.

2. A method for bonding a polyolefinic coating to a non-polyolefinic substrate by means of a crosslinkable adhesive chosen from the epoxy, cyano-acrylate, polyurethane, acrylic, polyamide, polyester, nitrile rubber-phenolic, polychloroprene rubber-phenolic, polyvinyl butyral adhesives and blended compositions thereof, in which a layer of said adhesive is applied between said substrate and said coating and the layers being laminated thereafter, characterized in that between said coating and said adhesive layers, a layer of a primer composition according to claim 1 is provided.

3. Use of a primer composition according to claim 1 in bonding a polyolefinic coating to a non-polyolefinic substrate.

## Revendications

1. Composition d'apprêts pour utilisation dans la liaison d'un revêtement polyoléfinique à un substrat non-polyoléfinique au moyen d'un adhésif réticulable choisi parmi les adhésifs époxy, cyano-acrylate, polyuréthane, acrylique, polyamide, polyester, nitrile-caoutchouc phénolique, polychloroprène-caoutchouc phénolique, polyvinyl-butyral et leurs mélanges, caractérisée en ce que ladite composition d'apprêts comprend :
   a) une ou plusieurs polyoléfines chlorurées avec une teneur de chlore de 10 à 80 % en poids, ou greffées avec des groupes carboxyliques dérivant d'acides acryliques ou maléiques ou leurs dérivés, ou un mélange desdites polyoléfines chlorurées et greffées,
   b) un ou plusieurs composants liant réticulables à base de caoutchouc, plastiques ou résines, et
   c) un ou plusieurs agents de réticulation choisis parmi les amines, amido-amines, polyamides, isocyanates, polyisocyanates, cyanurates et acrylates ayant des groupes hydroxyle et/ou carboxyle.

2. Procédé pour lier un revêtement polyoléfinique à un substrat non-polyoléfinique au moyen d'un adhésif réticulable choisi parmi les adhésifs époxy, cyano-acrylate, polyuréthane, acrylique, polyamide, polyester, nitrile-caoutchouc phénolique, polychloroprène-caoutchouc phénolique, polyvinyl-butyral et leurs mélanges, ledit procédé, dans lequel une couche dudit adhésif est appliquée entre ledit substrat et ledit revêtement et lesdites couches sont ensuite lamifiées ensemble, étant caractérisé en ce que entre ladite couche de revêtement et ladite couche dudit adhésif est prévue une couche de composition d'apprêts selon la revendication 1.

3. Utilisation d'une couche d'apprêts selon la revendication 1 dans la liaison d'un revêtement polyoléfinique à un substrat non-polyoléfinique.

**Patentansprüche**

1. Primer Zusammensetzung zur Verwendung beim Verbinden eines polyolefinischen Überzuges mit einem nichtpolyolefinischen Substrat mittels eines vernetzbaren Klebers aus der Gruppe der Epoxid-, Cyano-Acrylat-Polyurethan-, Acryl-, Polyamid-, Polyester-, Nitril-Gummiphenol-, Polychloropren-Gummiphenol-, Polyvinyl-Butyral-Kleber und Mischungen davon, **dadurch gekennzeichnet,** daß die Primer Zusammensetzung enthält:
   a) ein oder mehrere Polyolefine chloriert mit einem Chlor-Masseanteil zwischen 10 und 80 % oder versetzt mit von Acrylsäuren oder Malein-Säuren oder deren Derivaten abgeleiteten Carboxyl-Gruppen oder eine Kombination dieser chlorierten und versetzten Polyolefine,
   b) eine oder mehrere vernetzbare Bindekomponenten auf der Basis von Gummi, Kunststoff oder Harzen, und
   c) ein oder mehrere Vernetzungsmittel aus der Gruppe der Amine, Amido-Amine, Polyamide, Isocyanate, Poly-Isocyanate, Cyanurate und Acrylate mit Hydroxyl- und/oder Carboxyl-Gruppen.

2. Verfahren zum Verbinden eines polyolefinischen Überzuges mit einem nicht-polyolefinischen Substrat mittels eines vernetzbaren Klebers aus der Gruppe der Epoxid-, Cyano-Acrylat-, Polyurethan-, Acryl-, Polyamid-, Polyester-, Nitril-Gummiphenol-, Polychloropren-Gummiphenol, Polyvinyl-Butyral-Kleber und Mischungen davon, wobei eine Lage des besagten Klebers zwischen dem besagten Substrat und dem besagten Überzug aufgebracht wird und die Lagen danach laminiert werden, **dadurch gekennzeichnet,** daß zwischen dem besagten Überzug und den besagten Lagen des Klebers eine Lage der Primer Zusammensetzung gemäß Anspruch 1 vorgesehen wird.

3. Verwendung einer Primer Zusammensetzung gemäß Anspruch 1 beim Verbinden eine polyolefinischen Überzuges mit einem nicht-polyolefinischen Substrat.